# FASCICULE DE BREVET EUROPEEN

(11) **EP 3 132 549 B1**
(45) Date de publication et mention de la délivrance du brevet: **29.08.2018**
(21) Numéro de dépôt: 15725740.3
(22) Date de dépôt: 15.04.2015
(51) Int. Cl.: H04B 11/00

(54) **DISPOSITIF NOMADE AMELIORE**
VERBESSERTE NOMADENVORRICHTUNG
IMPROVED NOMAD DEVICE

(30) Priorité: 18.04.2014 FR 1453553
(43) Date de publication de la demande: 22.02.2017
(73) Titulaire: Stimshop, 75020 Paris (FR)
(72) Inventeur: DEPREZ, Romain, F-75020 Paris (FR); PERRET, Jean, 63000 Clermont-Ferrand (FR)
(74) Mandataire: Cabinet Netter
(86) Numéro de dépôt international: PCT/FR2015/051023
(87) Numéro de publication internationale: WO 2015/159024

(56) Documents cités:
- EP-A1- 1 906 696
- WO-A2-02/082696
- US-A1- 2013 171 930

## Description

L'invention concerne la transmission de données par un signal ultrasonore.

La démocratisation des appareils mobiles connectés, en particulier les téléphones ou « smartphones », ouvre de nombreuses perspectives de développement en termes de communication de proximité et de marketing ciblé.

Récemment, il a été constaté que les microphones des téléphones portables pouvaient capter, des fréquences dépassant légèrement la plage des fréquences acoustiques audibles pour l'oreille humaine (d'environ 20Hz jusqu'à 18kHz) et appartenant au domaine des ultrasons (de 18kHz jusqu'à environ 25kHz).

Or, de nombreux magasins disposent de systèmes de diffusion sonore pour créer des ambiances dans les points de vente, et leurs émissions sont souvent audibles à plusieurs mètres du point de vente. Il a donc été imaginé d'utiliser la bande des ultrasons de ces systèmes, pour transmettre des données à des téléphones portables à proximité de la source ultrasonore. En effet, les ultrasons sont généralement inaudibles pour l'oreille humaine, et les systèmes de diffusion sonore existants permettent l'utilisation de cette bande.

À ce sujet, on peut par exemple citer les documents WO 2011/014292 et EP 2 574 021. La modulation d'ondes ultrasonores à fins de communication et d'échange de données existe par ailleurs depuis de nombreuses années et a notamment été développée pour des applications militaires de type sonar et communication sous-marine. Des applications civiles ont également été envisagées, les documents EP 1 906 696, WO 97/31437 et US 6 607 136 en décrivent des exemples. Cependant, ces applications utilisent des solutions matérielles non adaptables sur des téléphones portables, et peuvent utiliser des fréquences élevées, de l'ordre du MHz.

À l'inverse, les ultrasons exploitables par les téléphones portables présentent des fréquences relativement faibles. Les ondes ultrasonores peuvent subir de nombreuses altérations susceptibles de perturber leur bonne réception et leur décodage. Ainsi, le signal peut subir divers phénomènes d'atténuation, mais également des perturbations par effet Doppler (dû au déplacement de l'utilisateur du téléphone), par propagation multidirectionnelle et réverbération sur l'environnement, par superposition des ondes, etc. Un téléphone portable comprenant un dispositif de communication par ultrason est divulgué par example dans le document US 2013/0171930. Des travaux de recherche ont proposé une solution pour pallier ces difficultés en utilisant une modulation à étalement de spectre basée sur une modulation linéaire de fréquence (LFM en anglais, pour « linear frequency modulation »), également désignée par le terme « chirp ». Ce type de modulation améliore la résistance du signal aux perturbations, mais la démodulation est beaucoup plus complexe. Il en résulte un coût de démodulation en termes de temps de calcul et d'énergie consommée qui est incompatible avec une application sur un dispositif nomade.

En effet, les dispositifs nomades comme les téléphones portables possèdent une autonomie et une puissance de calcul limitées. Il ne leur est donc pas possible de réaliser une écoute avec démodulation en permanence, du fait la démodulation du signal avec modulation chirp est une opération gourmande en termes de ressources de calcul et par voie de conséquence très consommatrice d'énergie. De plus, une telle solution n'est pas satisfaisante en termes de marketing car elle ne permet pas un fonctionnement continu en tâche de fond. L'utilisateur doit donc allumer et éteindre l'application avant et après être entré dans le lieu de vente. Cela est gênant tant d'un point de vue pratique que commercial. En effet, le but est de pousser un service vers l'utilisateur sans que celui-ci n'ait à agir, ce qui est incompatible avec cette pratique.

Une autre solution est de n'activer l'écoute du signal et de ne le démoduler qu'à intervalles réguliers. Cette technique est connue sous le nom d'attente active ou « polling ». Cette solution n'est hélas pas plus satisfaisante car, la démodulation du signal avec modulation chirp nécessite un temps d'environ une seconde, tandis qu'il a été estimé qu'une démodulation devrait être effectuée environ toutes les cinq secondes, ce qui correspond au temps de passage d'un utilisateur dans la zone de diffusion d'un émetteur. Il s'ensuit que le lancement de la démodulation reste trop fréquent et que le rapport du temps de traitement sur le temps d'attente reste trop élevé, et la consommation d'énergie trop importante.

Il existe par conséquent un besoin pour une solution permettant d'utiliser une modulation chirp dans un contexte nomade.

La présente invention vient améliorer la situation et propose un dispositif nomade comprenant au moins un microphone, et un démodulateur de signal à modulation chirp. Le dispositif comprend en outre un détecteur agencé pour déterminer une valeur d'énergie acoustique dans au moins une bande de fréquences ultrasons d'un signal acoustique tiré du microphone, et le démodulateur est agencé pour démoduler un signal acoustique tiré du microphone en réponse à la détermination par le détecteur d'une valeur d'énergie acoustique supérieure à une valeur seuil.

Ainsi, en prévoyant la mise en oeuvre d'un étage intermédiaire, il est possible de n'effectuer l'étape de démodulation chirp, fortement consommatrice, que lorsque la présence d'un signal modulé est avérée ou, à tout le moins, fortement probable.

Le détecteur, peu consommateur en termes d'énergie et de ressources de calcul peut ainsi être activé de manière continue ou de manière discontinue avec une fréquence d'activation relativement élevée, en tâche de fond du téléphone.

Selon les variantes, le dispositif pourra présenter une ou plusieurs des caractéristiques suivantes :
- le détecteur met en oeuvre un filtre de Goertzel,
- le filtre de Goertzel est appliqué avec une résolution comprise entre 100Hz et 2kHz, de préférence avec une résolution d'environ 400Hz,
- le détecteur met en oeuvre au moins un filtre passe-bande et un intégrateur,
- le dispositif comprend une pluralité de filtres passe-bande centrés respectivement sur les bandes de fréquences ultrasons sur lesquelles une valeur d'énergie acoustique est déterminée,
- le détecteur est activé de manière périodique, de préférence toutes les trois secondes, et
- le démodulateur et / ou le détecteur sont réalisés sous forme de composants logiciels exécutés par un processeur du dispositif.

Ce dispositif peut être intégré dans un système de communication comprenant au moins un émetteur (100) d'un signal acoustique à ultrasons à modulation.

L'invention concerne également un procédé de réception de données mis en oeuvre par un dispositif nomade comprenant les étapes suivantes :
a) recevoir un signal acoustique,
b) déterminer une valeur d'énergie acoustique dans au moins une bande de fréquences ultrasons du signal acoustique, et
c) démoduler le signal acoustique en réponse à la détermination d'une valeur d'énergie acoustique supérieure à une valeur seuil.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 est une représentation schématique d'un système de communication comprenant un dispositif de réception de données selon l'invention, et
- la figure 2 est une représentation exemplaire des étapes mises en oeuvre par le dispositif de réception de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

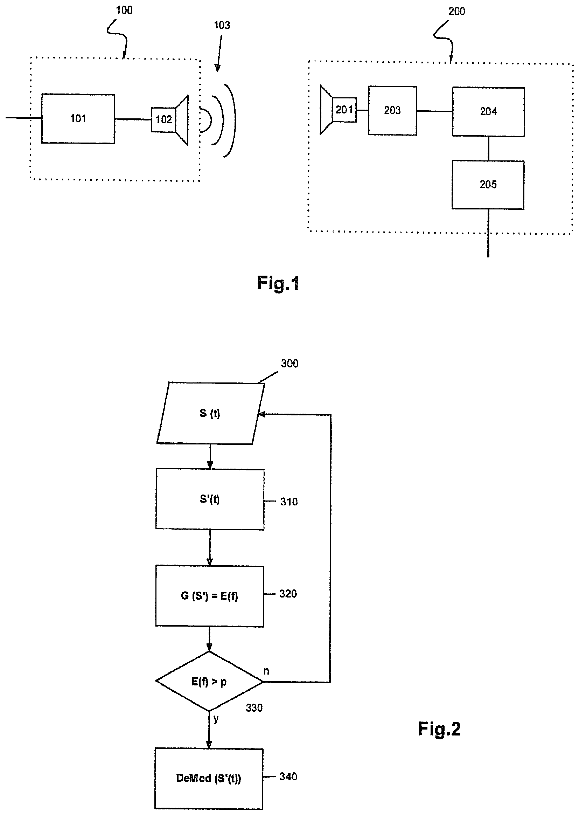

Un système de diffusion tel que représenté sur la figure 1 comprend un émetteur 100 et un récepteur 200.

L'émetteur 100 comprend un modulateur 101 associé à un haut-parleur 102 ayant une bande passante s'étendant dans la zone des fréquences ultrasonores, à savoir des fréquences comprises plus particulièrement entre 18kHz et 24kHz.

Le modulateur 101 reçoit des données à transmettre à des dispositifs nomade, et les encode et les module selon une modulation chirp à étalement de spectre (CSS pour « chirp spread spectrum ») dans une ou plusieurs plages de fréquences ultrasons comprises dans la bande passante du haut-parleur 102.

La technique d'encodage n'est pas directement l'objet de la présente demande, et l'homme du métier est libre de choisir la manière dont les données à transmettre sont encodées dans la modulation chirp. En variante, il n'y a pas d'encodage, et les données sont uniquement modulées selon la modulation chirp dans la ou les bandes ultrasons considérées.

Le haut-parleur 102 émet ainsi une onde acoustique modulée 103 comprenant la ou les composantes ultrasons modulées correspondantes, laquelle onde se propage au sein d'une zone de diffusion.

L'émetteur 100 est destiné tout particulièrement à être installé dans des espaces commerciaux, par exemple des centres commerciaux, des points de vente, des supermarchés, des parcs, etc. L'onde modulée 103 peut être émise seule, ou être superposée à un signal sonore audible, tel que par exemple une annonce vocale, une musique d'ambiance, etc.

Dans l'exemple décrit ici, chaque bande ultrason sur laquelle est réalisée la modulation chirp présente une largeur comprise entre 100Hz et 2kHz. Cette largeur de bande assure que le signal à modulation chirp est robuste vis-à-vis de la plupart des perturbations et interférences, notamment l'effet Doppler, les multiples réverbérations de l'onde acoustique modulée 103 dans l'environnement de la zone de diffusion, etc.

De manière préférée, la largeur des bandes ultrasons sur lesquelles est réalisée la modulation est d'environ 400Hz. En fonction de la largeur de bande choisie, il est possible de diviser la bande des fréquences ultrasons en plusieurs sous-plages qui pourront être utilisées comme autant de canaux de diffusion. De manière préférée, chaque sous-plage est séparée d'une autre sous-plage par un intervalle d'au moins 100Hz. De plus, la plupart des dispositifs de diffusion sonore, ainsi que la plupart des microphones et leurs filtres associés étant limités à environ 24kHz au maximum, les bandes ultrasons pourront être choisies entre 18kHz et 24kHz. Cependant, la bande passante de la majorité des microphones des téléphones se dégrade de manière significative au-delà de 20kHz. Pour cette raison, les bandes ultrasons pourront être choisies préférentiellement entre 18kHz et 20kHz

À titre d'exemple, la plage des fréquences comprises entre 18kHz et 22kHz pourra être comprendre trois sous-plages de 400Hz de largeur, à savoir :
- une première sous-plage couvrant la zone des fréquences comprises entre 18,5kHz et 18,9kHz,
- une deuxième sous-plage couvrant la zone des fréquences comprises entre 19kHz et 19,4kHz,
- une troisième sous-plage couvrant la zone des fréquences comprises entre 19,5kHz et 19,9kHz.

Les données à transmettre peuvent être émise sur un seul ou plusieurs des canaux de diffusion ainsi définis. La diffusion sur plusieurs canaux permet alors d'organiser une redondance du signal, ce qui rend la transmission plus robuste. Les canaux peuvent également être alloués à des émetteurs distincts, attribués, par exemple, à des zones de diffusion différentes.

En présence de plusieurs émetteurs ayant des zones de diffusion se recouvrant au moins partiellement, les émetteurs pourront être configurés pour utiliser chacun des canaux différents, afin de limiter les interférences. Cela permet d'éviter d'utiliser un encodage sur les données modulées.

Le récepteur 200 est un dispositif nomade qui comprend un microphone 201. Le microphone 201 est choisi de manière à avoir une bande passante correspondant aux fréquences d'émission de l'onde acoustique modulée 103. Dans l'exemple décrit ici, le récepteur 200 est un téléphone portable ou un smartphone dont le microphone est apte à capter les fréquences ultrasonores comprises entre 18kHz et 20kHz. En variante, le microphone 201 peut capter des signaux dont la fréquence peut s'étendre jusqu'à 24kHz.

Le récepteur 200 comprend en outre un filtre 203, un détecteur 204 et un démodulateur 205.

Le filtre 203 est optionnel et est conçu pour éliminer au moins une partie des fréquences situées en dehors de la plage des fréquences de modulation chirp. Il s'agit en particulier d'éliminer les des ondes sonores audibles. Le filtre 203 permet ainsi de débruiter le signal capté par le microphone 201.

Le détecteur 204 est conçu pour appliquer au signal une transformée mathématique permettant d'évaluer la présence d'une ou plusieurs fréquences dans la plage des fréquences de modulation. Dans l'exemple décrit ici, le détecteur 204 est mis en oeuvre au moyen d'un filtre de Goertzel. Dans le cas où plusieurs canaux de diffusion sont définis, le détecteur 204 peut opérer sur une ou plusieurs bandes de fréquences correspondantes séquentiellement ou en parallèle.

Selon une première variante de réalisation, le filtre de Goertzel est appliqué sur une fréquence correspondant au centre de la bande de fréquences utilisée pour la modulation chirp. À partir de cette fréquence centrale, le filtre de Goertzel est appliqué avec une résolution qui correspond sensiblement à la largeur de la bande de fréquences utilisée pour la modulation chirp.

Ainsi, par exemple, pour le canal de fréquence compris entre 18,5kHz et 18,9kHz, le filtre de Goertzel sera appliqué sur une fréquence proche de 18,7kHz, avec une résolution d'environ 200Hz autour de cette fréquence. De cette manière le filtre de Goertzel retournera une valeur représentant l'énergie des fréquences comprises dans la plage [18,5kHz ; 18,9kHz].

Ceci est particulièrement avantageux car la précision d'un filtre de Goertzel dépend du nombre d'échantillons qui sont utilisés, sa résolution augmentant avec le nombre d'échantillons. Classiquement, les filtres de Goertzel sont utilisés pour déterminer avec précision les coefficients de la transformée de Fourier à une fréquence donnée, donc avec un nombre important d'échantillons. Par exemple, 2048 échantillons sont nécessaires pour obtenir une résolution de 10Hz. Dans le cadre de l'invention, le fait que les plages de fréquence de modulation chirp sont assez larges permet d'utiliser un nombre réduit d'échantillons. Par exemple, on utilise 256 échantillons pour une bande de 400Hz. Ainsi, le calcul du filtre de Goertzel est à la fois rapide et consomme très peu d'énergie.

La valeur retournée par le filtre de Goertzel correspond au poids de la fréquence visée dans le signal reçu et permet d'évaluer la probabilité de présence d'une modulation CSS correspondante dans le signal. En effet, si cette valeur est élevée, cela signifie qu'il existe un ou plusieurs signaux d'énergie significative dans la bande considérée. Or, comme les ultrasons sont une bande rarement utilisée, cela signifie qu'il y a une forte chance qu'un signal à modulation chirp soit présent.

Cette détermination est réalisée par comparaison à un seuil de détection qui peut être ajusté. Dans l'exemple décrit ici, ce seuil est relatif. La détection est réalisée par comparaison à une bande de référence dans laquelle seul du bruit est attendu. Il s'agit alors d'appliquer le filtre de Goertzel sur la bande d'intérêt et la bande de référence, puis de calculer le rapport entre les deux valeurs obtenues. Un seuil relatif peut alors être appliqué, par exemple d'une valeur de 1000. La bande de référence peut être choisie comme étant l'une des trois bandes disponibles, mais dont on sait qu'elle n'est pas utilisée. En variante, la bande de référence peut être choisie parmi les bandes de fréquences qui relient les bandes disponibles dans la mesure où elles ne sont pas continues. L'homme du métier saura aussi choisir d'autres bandes de référence.

Bien sûr, des « faux positifs » peuvent avoir lieu : il est possible qu'une composante discrète dans la bande considérée présente une énergie suffisante pour que le détecteur 204 retourne une valeur supérieure au seuil de déclenchement. Cependant, l'utilisation de bandes de fréquences de largeur supérieure à 100Hz, et de 400Hz dans l'exemple décrit ici, rend cette probabilité assez faible.

Selon une deuxième variante de réalisation, chaque bande de fréquence de modulation chirp est divisée en plusieurs sous-bandes contiguës, et plusieurs filtres de Goertzel visant chacune de ces sous-bandes sont mis en oeuvre. Enfin, les valeurs retournées par chaque filtre sont alors additionnées pour recouvrer la valeur de la bande de modulation considérée.

Cette deuxième variante permet de limiter les faux positifs. En effet, si la valeur retournée par le détecteur 204 est supérieure au seuil mais qu'il s'agit d'un faux positif, plusieurs des valeurs liées aux sous-bandes seront nulles. Dans cette variante, le détecteur 204 peut donc être agencé pour vérifier que les valeurs détectées sur chaque sous-bande excèdent un sous-seuil.

Dans une troisième variante, la détection de seuil est réalisée de manière absolue. En variante, le filtre de Goertzel pourrait être remplacé par un ou plusieurs filtres passe-bande, en fonction du nombre de canaux retenu, en combinaison avec un intégrateur pour déterminer l'énergie du signal dans chaque bande de modulation. Dans une autre variante, d'autres propriétés de l'énergie déterminée par un filtre de Goertzel sur un intervalle de temps (1 seconde par exemple) peuvent être utilisées, notamment statistiques (comme la variance, l'écart-type, etc/).

Lorsque le détecteur 204 détermine qu'un signal à modulation chirp est vraisemblablement présent, le démodulateur 205 est activé.

Le démodulateur 205 décode le signal à modulation chirp et en extrait les données correspondantes. Le démodulateur 205 est un démodulateur compatible avec la modulation du modulateur 101 de l'émetteur 100, en l'espèce une modulation chirp. Lorsque les données sont encodées avant d'être modulées par l'émetteur 100, le démodulateur 205 peut également comprendre un décodeur correspondant. En variante, ce décodeur est déporté.

Dans l'exemple décrit ici, la démodulation est réalisée par convolution du signal et corrélation avec des signaux de référence (« matched filter »). La convolution pourra être optimisée en maximisant l'énergie grâce à un opérateur Teager-Kaiser. Le « matched filter » fonctionne de la façon suivante : le signal reçu est convolué avec le chirp retourné temporellement. Cela correspond à ce qu'on appelle typiquement une autocorrélation, ou une corrélation croisée. Cette opération peut également s'effectuer dans le domaine fréquentiel (convolution par FFT). Dans ce cas là, il faut multiplier la conjuguée complexe de la transformée de Fourier du chirp avec la transformée de Fourier du signal, puis procéder à une transformation de Fourier inverse du résultat pour obtenir un signal réel.

L'autocorrélation permet d'obtenir une courbe/vecteur/suite de valeurs au sein de laquelle des pics d'intensité seront situés aux instants où le chirp à retrouver est présent dans le signal. L'utilisation de l'opérateur de Teager-Kaiser permet à la fois d'affiner ces pics et d'augmenter leurs amplitudes. Le gain est un accès plus aisé aux positions de ces pics, et donc un meilleur décodage, ou un décodage équivalent dans des conditions dégradées.

Le rapport signal à bruit peut donc être amélioré grâce à l'emploi de l'opérateur Teager-Kaiser. En variante, l'opérateur de Teager-Kaiser peut être omis ou remplacé par une autre optimisation.

Ainsi, le filtre 203 (optionnel) et le détecteur 204 constituent un premier étage qui permet de détecter avec un rapport coût / fiabilité favorable la présence d'un signal à modulation chirp. Le démodulateur 205 constitue un deuxième étage qui n'est donc mis en oeuvre que lorsque cela est pertinent. Cette combinaison permet ainsi d'utiliser la modulation chirp dans un dispositif nomade, puisque la démodulation coûteuse n'est mise en oeuvre qu'aux moments opportuns. Ainsi, le dispositif de l'invention rend possible l'utilisation d'une modulation chirp dans un contexte nomade, contrairement à tous les préjugés existant.

La figure 2 représente les étapes mises en oeuvre par le dispositif nomade 200. Dans une première opération 300 un signal acoustique est reçu par le microphone et converti en signal audio analogique S(t).

Le signal audio est filtré par le filtre 203 et transformé en un signal audio S'(t) dans une opération 310. Le signal S'(t) est ensuite soumis au détecteur 204 qui applique un filtre de Goertzel G(S') et retourne une valeur d'énergie E(f) pour la fréquence ou plage de fréquences visée dans une opération 320. Selon la variante, la valeur d'énergie E(f) peut être absolue ou relative.

Dans une opération 320, il est testé si la valeur d'intensité E(f) est supérieure ou égale à une valeur p prédéterminée. Si c'est la cas, alors cela signifie qu'il est fortement probable que le signal reçu contienne une composante ultrason à modulation chirp, donc porteuse de données.

Le signal S'(t) est alors transmis au démodulateur 205, qui applique une fonction DeMod () dans une opération 340 pour démoduler ledit signal et extraire les données.

Si la valeur d'intensité E(f) est inférieure à une intensité p prédéterminée, alors le démodulateur 205 n'est pas activé, et le procédé reprend avec la captation du signal S(t).

La boucle de test peut être effectuée en continu, ou, pour encore optimiser la consommation d'énergie, prévoir un temps d'attente après chaque boucle. Par exemple, la boucle de test peut être effectuée une fois par seconde, voire toutes les trois secondes ou toutes les cinq secondes.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif nomade comprenant au moins un microphone (201), et un démodulateur (205) de signal à modulation chirp, **caractérisé en ce qu'**il comprend en outre un détecteur (204) agencé pour déterminer une valeur d'énergie acoustique dans au moins une bande de fréquences ultrasons d'un signal acoustique tiré du microphone (201), et **en ce que** le démodulateur (205) est agencé pour démoduler un signal acoustique tiré du microphone (201) en réponse à la détermination par le détecteur (204) d'une valeur d'énergie acoustique supérieure à une valeur seuil.

2. Dispositif selon la revendication 1, dans lequel le détecteur (204) met en oeuvre un filtre de Goertzel.

3. Dispositif selon la revendication 2, dans lequel le filtre de Goertzel est appliqué avec une résolution comprise entre 100Hz et 2kHz, de préférence avec une résolution d'environ 400Hz.

4. Dispositif selon la revendication 1, dans lequel le détecteur (204) met en oeuvre au moins un filtre passe-bande et un intégrateur.

5. Dispositif selon l'une des revendications 1 à 4, comprenant une pluralité de filtres passe-bande centrés respectivement sur les bandes de fréquences ultrasons sur lesquelles une valeur d'énergie acoustique est déterminée.

6. Dispositif selon l'une quelconque des revendications 1 à 3, dans lequel le détecteur (204) est activé de manière périodique, de préférence toutes les trois secondes.

7. Dispositif selon l'une quelconque des revendications 1 à 6, dans lequel le démodulateur (205) et / ou le détecteur (204) sont réalisés sous forme de composants logiciels exécutés par un processeur du dispositif.

8. Système de communication comprenant au moins un émetteur (100) d'un signal acoustique à ultrasons à modulation chirp et au moins un dispositif nomade (200), dans lequel le dispositif nomade (200) est selon l'une quelconque des revendications 1 à 7.

9. Procédé de réception de données mis en oeuvre par un dispositif selon l'une quelconque des revendications 1 à 7, **caractérisé en ce qu'**il comprend les étapes suivantes :
a) recevoir un signal acoustique,
b) déterminer une valeur d'énergie acoustique dans au moins une bande de fréquences ultrasons du signal acoustique, et
c) démoduler le signal acoustique en réponse à la détermination d'une valeur d'énergie acoustique supérieure à une valeur seuil.

10. Procédé selon la revendication 9, dans lequel l'étape b) comprend l'application d'un filtre de Goertzel.

11. Procédé selon la revendication 9 ou 10, dans lequel l'étape b) est répétée sensiblement toutes les trois secondes.

## Patentansprüche

1. Tragbare Vorrichtung mit mindestens einem Mikrofon (201) und einem Demodulator (205) eines Signal gemäß Chirp-Modulation, **dadurch gekennzeichnet, dass** sie ferner einen Detektor (204) umfasst, der eingerichtet ist, um einen akustischen Energiewert in mindestens einem Ultraschallfrequenzband eines von dem Mikrofon (201) erhaltenen akustischen Signals zu bestimmen, und dass der Demodulator (205) eingerichtet ist, um ein von dem Mikrofon (201) erhaltenes akustisches Signal zu demodulieren, in Reaktion auf die Bestimmung, durch den Detektor (204), eines akustischen Energiewertes größer als ein Schwellenwert.

2. Vorrichtung nach Anspruch 1, wobei der Detektor (204) einen Goertzel-Filter implementiert.

3. Vorrichtung nach Anspruch 2, bei dem der Goertzel-Filter mit einer Auflösung zwischen 100Hz und 2kHz, vorzugsweise mit einer Auflösung von etwa 400Hz, eingesetzt wird.

4. Vorrichtung nach Anspruch 1, wobei der Detektor (204) mindestens einen Bandpassfilter und einen Integrator implementiert.

5. Vorrichtung nach einem der Ansprüche 1 bis 4, umfassend eine Vielzahl von Bandpassfiltern, die jeweils auf die Ultraschallfrequenzbänder zentriert sind, auf denen ein akustischer Energiewert bestimmt wird.

6. Vorrichtung nach einem der Ansprüche 1 bis 3, wobei der Detektor (204) periodisch, vorzugsweise alle drei Sekunden, aktiviert wird.

7. Vorrichtung nach einem der Ansprüche 1 bis 6, wobei der Demodulator (205) und/oder Detektor (204) als von einem Prozessor der Vorrichtung ausgeführte Softwarekomponenten realisiert sind.

8. Kommunikationssystem mit mindestens einem Sender (100) eines akustischen Ultraschallsignals gemäß Chirp-Modulation und mindestens einer tragbaren Vorrichtung (200), wobei die tragbare Vorrichtung (200) nach einem der Ansprüche 1 bis 7 ist.

9. Verfahren zum Empfang von Daten, das von einer Vorrichtung nach einem der Ansprüche 1 bis 7 ausgeführt wird, **dadurch gekennzeichnet, dass** es die folgenden Schritte umfasst:
a) Erhalten eines akustischen Signals,
b) Bestimmung eines akustischen Energiewertes in mindestens einem Ultraschallfrequenzband des akustischen Signals, und
c) Demodulation des akustischen Signals als Reaktion auf die Bestimmung eines akustischen Energiewertes oberhalb eines Schwellenwertes.

10. Verfahren nach Anspruch 9, wobei Schritt b) das Anwenden eines Goertzel-Filters umfasst.

11. Verfahren nach Anspruch 9 oder 10, wobei Schritt b) im Wesentlichen alle drei Sekunden wiederholt wird.

## Claims

1. Mobile device comprising at least one microphone (201), and a demodulator (205) of signals with chirp modulation, **characterized in that** it also comprises a detector (204) arranged to determine an acoustic energy value in at least one ultrasound frequency band of an acoustic signal derived from the microphone (201), and **in that** the demodulator (205) is arranged to demodulate an acoustic signal derived from the microphone (201) in response to the determination by the detector (204) of an acoustic energy value greater than a threshold value.

2. Device according to Claim 1, in which the detector (204) implements a Goertzel filter.

3. Device according to Claim 2, in which the Goertzel filter is applied with a resolution of between 100Hz and 2kHz, preferably with a resolution of approximately 400Hz.

4. Device according to Claim 1, in which the detector (204) implements at least one bandpass filter and one integrator.

5. Device according to one of Claims 1 to 4, comprising a plurality of bandpass filters centred respectively on the ultrasound frequency bands over which an acoustic energy value is determined.

6. Device according to any one of Claims 1 to 3, in which the detector (205) is activated periodically, preferably every three seconds.

7. Device according to any one of Claims 1 to 6, in which the demodulator (204) and/or the detector (204) are produced in the form of software components executed by a processor of the device.

8. Communication system comprising at least one transmitter (100) of an ultrasound acoustic signal with chirp modulation and at least one mobile device (200), in which the mobile device (200) is according to any one of Claims 1 to 7.

9. Data reception method implemented by a device according to any one of Claims 1 to 7, **characterized in that** it comprises the following steps:
a) receiving an acoustic signal,
b) determining an acoustic energy value in at least one ultrasound frequency band of the acoustic signal, and
c) demodulating the acoustic signal in response to the determination of an acoustic energy value greater than a threshold value.

10. Method according to Claim 9, in which the step b) comprises the application of a Goertzel filter.

11. Method according to Claim 9 or 10, in which the step b) is repeated substantially every three seconds.
